# EUROPÄISCHE PATENTSCHRIFT

(11) **EP 2 105 201 B1**
(45) Veröffentlichungstag und Bekanntmachung des Hinweises auf die Patenterteilung: **06.06.2012**
(21) Anmeldenummer: 09100092.7
(22) Anmeldetag: 03.02.2009
(51) Int. Cl.: B01F 3/08, B01F 3/10, B01F 7/00, B01F 7/24, B01F 15/06

(54) **Vorrichtung und Verfahren zum Mischen von viskosen oder plastischen Medien**
Device and method for mixing viscous or plastic media
Dispositif et procédé de mélange de milieux visqueux ou plastiques

(30) Priorität: 28.03.2008 DE 102008000878
(43) Veröffentlichungstag der Anmeldung: 30.09.2009
(73) Patentinhaber: Robert Bosch GmbH, 70442 Stuttgart (DE)
(72) Erfinder: Brinz, Thomas, 73266 Bissingen a. d. Teck (DE); Aupperle, Bernd, 71394 Kernen (DE); Weber, Helmut, 71384 Weinstadt-Beutelsbach (DE); Wieduwilt, Ulrich, 73529 Schwaebisch Gmuend (DE)

(56) Entgegenhaltungen:
- EP-A- 1 347 093
- DE-A1- 1 542 449
- DE-A1- 2 124 642
- DE-A1- 2 440 810
- DE-C- 714 405
- SU-A1- 1 419 658
- US-A- 1 997 301
- US-A- 3 329 409

## Beschreibung

### Stand der Technik

Die Erfindung geht aus von einer Vorrichtung zur Mischung, Homogenisierung und/oder Herstellung von viskosen oder plastischen Medien, umfassend einen Behälter und mindestens eine rotierbar gelagerte Schnecke, die zumindest teilweise von dem Behälter umschlossen ist. Weiterhin betrifft die Erfindung ein Verfahren zum Mischen, Homogenisieren und/oder Herstellen von viskosen oder plastischen Medien in einem Behälter, umfassend mindestens eine Schnecke, die zumindestens teilweise von dem Behälter umschlossen ist. Schließlich betrifft die Erfindung auch eine Verwendung der Vorrichtung.

Zur Mischung, Homogenisierung und/oder Herstellung von viskosen oder plastischen Medien werden im Allgemeinen Extruder eingesetzt. Diese umfassen in der Regel mindestens eine Schnecke, die in einem geschlossenen Gehäuse rotiert, wobei an einer Seite das zu mischende und gegebenenfalls zu homogenisierende Medium zugegeben wird und an der anderen Seite über eine Düse wieder ausgestoßen wird. Aufgrund der für die Durchmischung notwendige Länge der Extruder und deren kontinuierliches Arbeiten ist es im Allgemeinen nicht möglich, nur kleine Mengen herzustellen oder nur kleine Ausgangsmengen zu mischen. Zudem fällt beim Leeren des Extruders immer ein gewisses Maß an Abfällen an. Ein weiterer Nachteil der Verwendung von Extrudern ist, dass diese vergleichsweise teuer sind.

Auch in der Entwicklung werden zur Mischung, Homogenisierung und/oder Herstellung von viskosen oder plastischen Medien im Allgemeinen Extruder eingesetzt. Hierbei werden üblicherweise Doppelschnecken-Laborextruder verwendet.

Im Rahmen der Hochdurchsatzforschung ist derzeit eine große Anzahl an derartigen Laborextrudern erforderlich, um die notwendigen Mischungen herzustellen.

Diesbezüglich sind aus der US-A-3329409, der DE 1542449 und der DE 2124642 bereits Vorrichtungen zur Durchmischung viskoser Medien bekannt, wobei die Durchmischung mittels einer Schneckenvorrichtung erfolgt.

### Offenbarung der Erfindung

### Vorteile der Erfindung

Eine erfindungsgemäße Vorrichtung zur Mischung, Homogenisierung und/oder Herstellung von viskosen oder plastischen Medien umfasst einen Behälter und mindestens eine Schnecke, die zumindest teilweise von dem Behälter umschlossen ist. Die mindestens eine Schnecke ist so in dem Behälter positioniert, dass durch eine Rotation der mindestens einen Schnecke in Bezug zum Behälter das in dem Behälter enthaltene Medium gegen einen geschlossenen Boden des Behälters gefördert wird.

Die Rotation der Schnecke kann dabei durch Rotieren der Schnecke bei feststehendem Behälter, durch Rotieren des Behälters bei feststehender Schnecke oder durch Rotation von Schnecke und Behälter mit unterschiedlicher Geschwindigkeit und/oder unterschiedlicher Drehrichtung erzielt werden. Bevorzugt ist jedoch die Schnecke rotierbar und der Behälter feststehend.

Im Unterschied zu Extrudern lassen sich mit der erfindungsgemäßen Vorrichtung auch kleine Mengen auf einfache Weise mischen und gegebenenfalls homogenisieren. Es ist jeweils lediglich eine Füllung des Behälters erforderlich und nicht notwendig, wie bei einem Extruder kontinuierlich zu mischendes Material nachzuführen.

Um eine Strömung des viskosen oder plastischen Mediums in dem Behälter zu ermöglichen, umfasst die Schnecke mindestens einen Gang der mindestens eine Unterbrechung in axialer Richtung aufweist. Durch die mindestens eine Unterbrechung in axialer Richtung kann das Medium entgegen der Förderrichtung der Schnecke zurückströmen. Dies ermöglicht einen kontinuierlichen Transport von Medium in Richtung des Bodens des Behälters, ohne dass das Medium aufgrund der Schneckenförderung zum Behälterboden hin aufgestaut wird und zu dem Zeitpunkt, zu dem der am Behälterboden aufgebaute Druck dem Förderdruck entspricht, keine Förderung mehr erfolgt. Für eine gleichmäßige Mischung und/oder Homogenisierung entspricht die Länge der Unterbrechung in axialer Richtung vorzugsweise der Füllhöhe des Behälters.

In einer alternativen Ausführungsform weist die Schnecke anstelle der Gangunterbrechung an mindestens einer Seite eine Abflachung in axialer Richtung auf. Die Abflachung kann zum Beispiel dadurch realisiert werden, dass bei einem zylindrischen Kern der Schnecke die Höhe des Steges im Bereich der Abflachung abnimmt. Hierdurch nimmt auch die Ganghöhe im Bereich der Abflachung ab. Alternativ ist es auch möglich, den Steg mit einer konstanten Ganghöhe auszuführen und den Kern der Schnecke an mindestens einer Seite abzuflachen.

Wenn an mindestens zwei Seiten der Schnecke eine Abflachung vorgesehen ist, so ist es zum Beispiel möglich, den Kern bei konstanter Gangtiefe elliptisch auszubilden.

Durch die mindestens eine Abflachung entsteht im Bereich der Abflachung bei Verwendung eines Behälters mit zylinderförmigem Querschnitt ein vergrößerter Spalt, durch den das viskose oder plastische Medium entgegen der Förderrichtung der Schnecke zurückströmen kann.

Alternativ ist es weiterhin möglich, dass der Behälter zum Beispiel mindestens einen Kanal in seiner die Schnecke umschließenden Wandung aufweist. In diesem Fall erfolgt das Zurückströmen des viskosen oder plastischen Mediums durch den Kanal. Dieser kann zum Beispiel dadurch ausgebildet werden, dass in der die Schnecke umschließenden Wandung eine Ausbuchtung ausgebildet ist. Weiterhin ist es auch möglich, zum Beispiel bei einer Schnecke mit einem zylindrischen Querschnitt einen elliptischen oder tropfenförmigen Behälter vorzusehen. Weiterhin ist es zum Beispiel auch möglich, den Behälter mit einem beliebigen eckigen Querschnitt auszuführen, wobei jeweils im Bereich der Ecken des Behälters ein Kanal zur Rückströmung des Mediums ausgebildet wird. In den vorliegend beschriebenen Ausführungsformen ist der Kanal jeweils zur Schnecke hin offen. Alternativ ist es jedoch auch möglich, einen zum Behälter hin geschlossenen Kanal vorzusehen. In diesem Fall ist vorzugsweise im Bereich des Bodens des Behälters ein Zulauf in den Kanal vorgesehen und im Bereich der Füllhöhe des Mediums im Behälter ein Rücklauf in den Behälter. Mit Hilfe der Schnecke wird in diesem Fall das viskose oder plastische Medium in den Kanal gefördert, durch diesen hindurchgepresst und strömt im Bereich der Füllhöhe wieder in den Behälter zurück.

In einer Ausführungsform umfasst die Vorrichtung mindestens zwei Schnecken, die von dem Behälter umschlossen sind. Die Schnecken kämmen dabei vorzugsweise ineinander. Zur Förderung des im Behälter enthaltenen Mediums gegen den geschlossenen Boden des Behälters können die Schnecken gleichsinnig oder gegensinnig rotierend ausgebildet sein. Ebenso wie bei der Ausführungsform mit einer Schnecke ist es auch bei der Ausführungsform mit mindestens zwei Schnecken bevorzugt, mindestens eine der Schnecken oder den Behälter so auszugestalten, dass das viskose oder plastische Medium entgegen der Förderrichtung der Schnecke zurückströmen kann. Hierzu ist zum Beispiel in mindestens einer der Schnecken eine Unterbrechung in axialer Richtung im Schneckengang ausgebildet, wie vorstehend für eine Schnecke beschrieben, oder mindestens eine der Schnecken weist mindestens eine Abflachung auf. Weiterhin ist es auch in der Ausführungsform mit mindestens zwei Schnecken möglich, dass der Behälter mindestens einen Kanal aufweist, durch den das viskose oder plastische Medium zurückströmen kann.

Bei Einsatz von mehr als zwei Schnecken können diese zum Beispiel in Reihe nebeneinander angeordnet sein. Alternativ ist es zum Beispiel auch möglich, die Schnecken in Form einer Planetenanordnung anzuordnen, wobei im Allgemeinen mindestens drei Schnecken um eine zentral angeordnete mittlere Schnecke angeordnet sind. Bei einer Planetenanordnung haben vorzugsweise die die zentrale Schnecke umschließenden Schnecken jeweils die gleiche Geometrie, wobei diese von der Geometrie der zentralen Schnecke abweichen kann. Es ist jedoch auch möglich, dass alle Schnecken mit der gleichen Geometrie ausgestaltet sind. Wie bei der Ausführungsform mit zwei Schnecken können auch bei der Ausführungsform mit mehr als zwei Schnecken die Schnecken gleich- oder gegensinnig betrieben werden. Bei einer Planetenanordnung ist es so zum Beispiel möglich, die äußeren Schnecken gleichsinnig zu betreiben und gegensinnig zur zentralen Schnecke. Jedoch ist es alternativ auch möglich, auch die zentrale Schnecke gleichsinnig mit den umgebenden Schnecken zu betreiben.

Die mindestens eine Schnecke kann eine konstante Geometrie aufweisen oder Bereiche unterschiedlicher Geometrie. Wenn mindestens zwei Schnecken eingesetzt werden, so ist es bevorzugt, dass die Schnecken jeweils konstante Geometrien aufweisen. Sollten bei mindestens zwei Schnecken Bereiche unterschiedlicher Geometrie vorgesehen sein, so ist es bevorzugt, dass die Schnecken gleich gestaltet sind, so dass jeweils Bereiche gleicher Geometrie ineinander kämmen. Es ist jedoch auch möglich, dass zum Beispiel Bereiche unterschiedlicher Geometrie ineinander kämmen. So kann zum Beispiel im kämmenden Bereich eine Schnecke eine große Gangtiefe und die andere Schnecke eine kleine Gangtiefe aufweisen. Bereiche unterschiedlicher Geometrie lassen sich zum Beispiel durch unterschiedliche Gangtiefen, beispielsweise durch einen größeren oder kleineren Durchmesser des Schneckenkerns, kontinuierlich zunehmende oder abnehmende Gangtiefe, unterschiedliche Steigungswinkel des Schneckenganges oder auch beispielsweise durch eingängige und mehrgängige, beispielsweise zweigängige Bereiche der Schnecke realisieren. Weiterhin ist es auch möglich, dass die Schnecke zum Beispiel Mischelemente umfasst, wie diese beispielsweise von Extrudern, wie sie zum Beispiel in der Kunststoffverarbeitung eingesetzt werden, bekannt sind.

In einer bevorzugten Ausführungsform ist die mindestens eine Schnecke aus dem Behälter entnehmbar. Dies hat den Vorteil, dass auf einfache Weise die Behälter mit dem darin enthaltenen viskosen oder plastischen Medium ausgetauscht werden können. Auf diese Weise lassen sich mit einer Schnecke auf einfache Weise nacheinander unterschiedliche Medien mischen, homogenisieren und/oder herstellen. Zudem ist hierdurch eine einfache Reinigung der Schnecke nach einem Mischprozess möglich. Ein weiterer Vorteil ist darin zu sehen, dass der Behälter einfacher zu entleeren ist, wenn die Schnecke entnommen ist. Zudem lässt sich das im Behälter enthaltene Medium leichter zum Beispiel für weitere Versuche entnehmen.

Durch das leichtere Wechseln des Behälters mit dem darin enthaltenen viskosen oder plastischen Medium im Vergleich zu den aus dem Stand der Technik bekannten Vorrichtungen, sowie aufgrund des geringeren Materialbedarfs eignet sich die Vorrichtung insbesondere auch für eine Hochdurchsatzforschung.

Die Erfindung betrifft weiterhin ein Verfahren zum Mischen, Homogenisieren und/oder Herstellen von viskosen oder plastischen Medien in einem Behälter, umfassend mindestens eine Schnecke, die zumindest teilweise von dem Behälter umschlossen ist, wobei das viskose oder plastische Medium in dem Behälter von der Schnecke in Richtung des Bodens des Behälters gefördert wird, dort umgelenkt und entlang geeigneter Kanäle wieder entgegen der Förderrichtung zurückströmt. Durch das erfindungsgemäße Verfahren lassen sich auch kleine Mengen an viskosem oder plastischem Medium auf einfache Weise mischen, homogenisieren und/oder herstellen, ohne dass ein kontinuierlich betriebener Extruder eingesetzt werden muss. Auf diese Weise lassen sich zum Beispiel Formulierungsvorgänge der kombinatorischen Chemie im hochviskosen bis plastischen Produktbereich signifikant vereinfachen. Durch den Einsatz der Schnecke, die in dem Behälter rotiert, ist auch eine intensive Scherung und/oder Erwärmung des behandelten Materials mit einem deutlich vereinfachten apparativen Aufwand möglich. Die Erwärmung erfolgt dabei einerseits durch die Scherung aufgrund des Transports des Mediums mit der Schnecke, alternativ ist es jedoch auch möglich, den Behälter zum Beispiel mit einer Heizung zu versehen und das Medium von außen zu erwärmen. Hierzu ist es zum Beispiel möglich, den Behälter mit einem Heizmantel, der von einem Heizmedium durchströmt wird, zu versehen. Alternativ ist es auch möglich, zum Beispiel eine elektrische Widerstandsheizung in die Behälterwand einzubauen. Auch jede beliebige andere, dem Fachmann bekannte Heizung zur Erwärmung des Mediums im Behälter kann eingesetzt werden.

Durch die Gestaltung der Vorrichtung mit Behälter mit darin rotierender Schnecke wird eine statische Mischung mit mechanischem Transport kombiniert. Im Unterschied zu einem Extruder erlaubt dies einen Batchbetrieb, bei dem nur geringe Materialmengen notwendig sind.

Insbesondere bei hochviskosen und plastischen Medien lässt sich ein Entleeren des Behälters zum Beispiel durch Umkehrung der Rotationsrichtung der Schnecke erreichen. In diesem Fall wird das im Behälter enthaltene Medium nicht in Richtung des Behälterbodens, sondern in Richtung der offenen Oberseite des Behälters gefördert. Zum Beispiel über einen geeigneten Überlauf am Behälter lässt sich das im Behälter enthaltene Medium dann gezielt entnehmen. Alternativ ist es jedoch auch möglich, insbesondere dann, wenn die Schnecke aus dem Behälter entnehmbar ist, zunächst die Schnecke aus dem Behälter zu entnehmen und dann in Abhängigkeit von der Viskosität des Mediums das Medium aus dem Behälter auszuleeren oder bei hochviskosem beziehungsweise plastischem Medium, sofern dieses an der Schnecke haftet, das Medium von der Schnecke zu entfernen.

Um das Medium im Behälter zurückzuhalten, ist es zum Beispiel möglich, dass die Schnecke aus dem Behälter entfernt wird, solange diese noch rotiert und das im Behälter enthaltene Medium in Richtung des Bodens des Behälters transportiert. Auf diese Weise erfolgt bereits eine Vorabreinigung der Schnecke bei Entnahme der Schnecke aus dem Behälter. Dies führt zum einen dazu, dass eine größere Menge an Medium im Behälter zurückbleibt, mit der weitere Versuche durchgeführt werden können, zudem wird der Reinigungsaufwand der Schnecke reduziert.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: eine schematische Darstellung der erfindungsgemäßen Vorrichtung,
- Figur 2: eine vergrößerte Darstellung mit Strömungsverlauf im Medium.

### Ausführungsformen

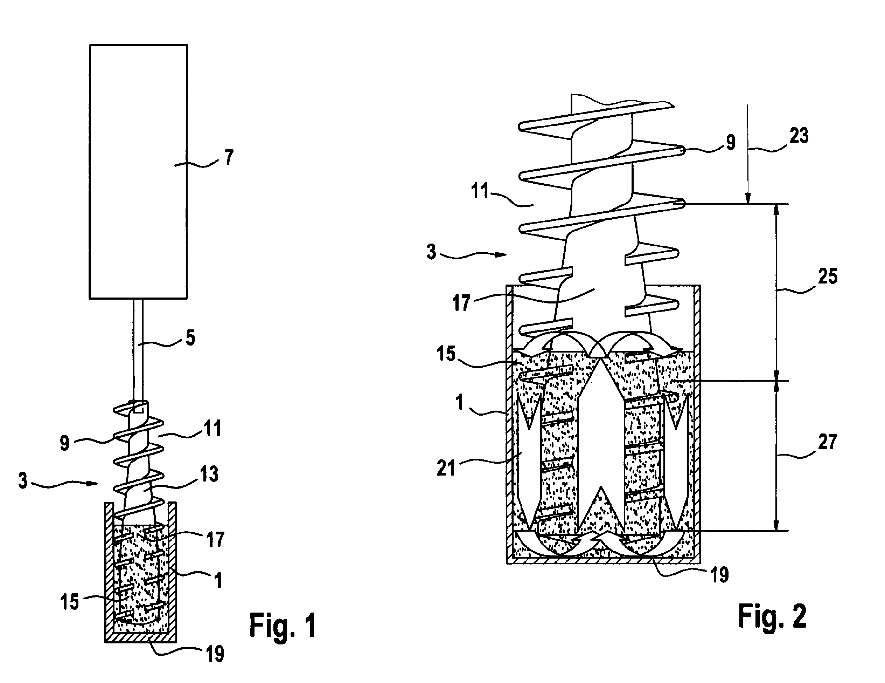

In Figur 1 ist eine erfindungsgemäße Vorrichtung schematisch dargestellt.

Eine erfindungsgemäße Vorrichtung zur Mischung, Homogenisierung und/oder Herstellung von viskosen oder plastischen Medien umfasst einen Behälter 1, der die zu mischenden Substanzen aufnimmt.

Viskose oder plastische Medien, die in dem Behälter 1 gemischt, homogenisiert oder hergestellt werden können, sind beispielsweise Polymerschmelzen. So eignet sich die erfindungsgemäße Vorrichtung zum Beispiel zum Mischen, Homogenisieren und/oder Herstellen von Pulverlacken, Kunststoffcompounds oder -blends oder anorganischen und/oder organischen Composites.

So können in dem Behälter 1 zum Beispiel Monomere vorgelegt werden, die zu einem Polymer reagieren. Weiterhin ist es auch möglich, zum Beispiel ein Polymergranulat vorzulegen, das zu einer Polymerschmelze aufgeschmolzen wird. Diesem können beispielsweise Additive zugegeben werden, die homogen in die Polymerschmelze eingemischt werden.

Erfindungsgemäß umschließt der Behälter 1 eine Schnecke 3. Die Schnecke 3 ist rotierbar gelagert und in der hier dargestellten Ausführungsform mit einer Welle 5 verbunden. Die Welle 5 verbindet die Schnecke 3 mit einem Antrieb 7. Als Antrieb 7 eignet sich beispielsweise jeder beliebige, dem Fachmann bekannte Elektromotor. Jedoch ist auch jeder andere, dem Fachmann bekannte Antrieb denkbar, mit dem die Schnecke 3 in eine Rotationsbewegung versetzt werden kann.

Um die Schnecke aus dem Behälter entfernen zu können, ist es weiterhin bevorzugt, wenn diese auch in axialer Richtung bewegt werden kann. Die Axialbewegung kann dabei zum Beispiel ebenfalls durch den Antrieb 7 ausgeführt werden. Alternativ ist es jedoch auch möglich, zum Beispiel den Behälter 1 beweglich zu lagern, so dass dieser auf und ab bewegt werden kann, wobei die Schnecke 3 stationär verbleibt.

Um insbesondere bei hochviskosen oder plastischen Medien eine Bewegung der Schnecke 3 in den Behälter 1 oder aus dem Behälter 1 mit vergleichsweise geringem Kraftaufwand durchführen zu können, ist es bevorzugt, die Axialbewegung und die Rotationsbewegung der Schnecke zu überlagern. Zudem ist es weiterhin bevorzugt, dass bei einer Bewegung der Schnecke 3 in den Behälter 1 die Schnecke 3 in Förderrichtung rotiert und bei einer Bewegung der Schnecke 3 aus dem Behälter 1 heraus entgegen der Förderrichtung der Schnecke 3 rotiert.

Alternativ zur Rotation der Schnecke 3 ist es jedoch auch möglich, dass z.B. der Behälter 1 um die Schnecke 3 rotiert. Die Schnecke 3 kann dabei feststehen oder ebenfalls mit einer zum Behälter 3 verschiedenen Geschwindigkeit oder Drehrichtung rotieren.

In der hier dargestellten Ausführungsform umfasst die Schnecke 3 einen umlaufenden Steg 9, der einen Gang 11 begrenzt. Alternativ zu der hier dargestellten Ausführungsform ist es selbstverständlich auch möglich, dass die Schnecke 3 zwei- oder mehrgängig ausgebildet ist. In diesem Fall umlaufen den Kern 13 der Schnecke 3 in Abhängigkeit von der Anzahl der Gänge 11 zwei oder mehr Stege 9.

Um eine Durchmischung des Mediums 15 im Behälter 1 zu realisieren, weist der Gang 11 mindestens eine Unterbrechung 17 in axialer Richtung auf. Durch die Unterbrechung 17 kann Medium 15 entgegen der Förderrichtung der Schnecke 3 strömen. Durch die Rotationsbewegung der Schnecke 3 wird das Medium 15 im Behälter 1 in Richtung des Bodens 19 des Behälters 1 gefördert. Am Behälterboden 19 baut sich ein erhöhter Druck auf. Sobald der Druck am Behälterboden 19 den durch die Schnecke 3 aufgebauten Förderdruck übersteigt, strömt das Medium 15 entlang der Unterbrechung 17 in der Schnecke 3 entgegen der Förderrichtung zurück. Dies ist durch Strömungspfeile 21 in Figur 2 detailliert dargestellt.

Alternativ zu der hier dargestellten Unterbrechung 17 des Ganges 11 ist es auch möglich, die Schnecke 3 nicht mit einem kreisförmigen Querschnitt auszuführen, sondern an mindestens einer Seite abgeflacht. In diesem Fall kann die Rückströmung entlang der Abflachung erfolgen. Die Abflachung kann zum Beispiel dadurch realisiert werden, dass der Steg 9 in einem Bereich der Schnecke 3 eine niedrigere Höhe aufweist als in anderen Bereichen. Weiterhin ist es auch möglich, bei gleicher Höhe des Steges 9 den Kern 13 nicht zylindrisch, sondern beispielsweise elliptisch auszuführen oder mit einer Abflachung zu versehen. Eine weitere Möglichkeit zur Realisierung einer Rückströmung lässt sich beispielsweise dadurch erzielen, dass im Behälter 1 ein Kanal ausgebildet wird. Dieser kann zur Schnecke 3 hin offen oder abgeschlossen sein. Wenn der Kanal abgeschlossen ist, so befindet sich im Bereich des Bodens 19 des Behälters 1 eine Einlassöffnung in den Kanal und der Kanal mündet im Bereich der Füllhöhe wieder im Behälter 1, so dass das Medium 15 vom Behälterboden 19 durch den Kanal wieder oben in den Behälter 1 einströmt. Der für den Transport des Mediums 15 im Kanal notwendige Druck wird durch die Schnecke 3 aufgebaut.

In der hier dargestellten Ausführungsform umfasst die Schnecke 3 drei Bereiche. Einen ersten Bereich 23, in dem der Kern 13 einen konstanten Durchmesser aufweist, einen zweiten Bereich 25, in dem der Durchmesser des Kerns 13 kontinuierlich zunimmt, und einen dritten Bereich 27, in dem der Kern 13 wieder einen konstanten Durchmesser aufweist, wobei der Durchmesser im dritten Bereich 27 größer ist als im ersten Bereich 23. Der Außendurchmesser der Schnecke bleibt konstant. Hierdurch ändert sich die Gangtiefe 11 vom ersten Bereich 23 zum dritten Bereich 27. Die Füllhöhe des Mediums 15 im Behälter 1 entspricht vorzugsweise der Höhe des dritten Bereiches 27.

Neben der hier dargestellten Ausführungsform ist es jedoch auch möglich, dass die Schnecke 3 zum Beispiel im Medium 15 Bereiche unterschiedlicher Geometrie aufweist. Dies können zum Beispiel Bereiche unterschiedlicher Gangtiefe, unterschiedlicher Gangzahl oder auch unterschiedlicher Gangsteigung sein.

Weiterhin ist es auch möglich, dass anstelle nur einer Schnecke 3 zwei oder mehr Schnecken eingesetzt werden. Bei zwei Schnecken können diese nicht kämmend, kämmend oder dicht kämmend sein. Zudem können die Schnecken gleichsinnig oder gegensinnig drehend sein. Weiterhin ist es auch möglich, mehr als zwei Schnecken 3 einzusetzen. Diese können nebeneinander oder in beliebiger Anordnung zueinander angeordnet sein. So ist es zum Beispiel möglich, Schnecken in Form einer Planetenanordnung anzuordnen. In diesem Fall umschließen mehrere Schnecken eine zentrale Schnecke, wobei die zentrale Schnecke im Allgemeinen einen größeren Durchmesser aufweist als die Schnecken, die diese umgeben.

## Patentansprüche

1. Vorrichtung zur Mischung, Homogenisierung und/oder Herstellung von viskosen oder plastischen Medien (15), umfassend einen Behälter (1) und mindestens eine Schnecke (3), die zumindest teilweise von dem Behälter (1) umschlossen ist,
**dadurch gekennzeichnet, dass** die mindestens eine Schnecke (3) so in dem Behälter (1) positioniert ist, dass durch eine Rotation der mindestens einen Schnecke (3) in Bezug zum Behälter (1) das in dem Behälter (1) enthaltene Medium (15) gegen einen geschlossenen Boden (19) des Behälters (1) gefördert wird, dort umgelenkt und entlang von Kanälen der Vorrichtung in Form einer Unterbrechung (17) wieder entgegen der Förderrichtung zurückströmt, wobei die Schnecke (3) mindestens einen Gang (11) umfasst, der die mindestens eine Unterbrechung (17) in axialer Richtung aufweist und das Zurückströmen des Mediums entgegen der Förderrichtung entlang der Unterbrechung (17) in der Schnecke (3) erfolgt.

2. Vorrichtung gemäß Anspruch 1, **dadurch gekennzeichnet, dass** die Schnecke (3) mindestens einen Gang (11) umfasst, der mindestens eine Unterbrechung (17) in axialer Richtung aufweist.

3. Vorrichtung gemäß Anspruch 1, **dadurch gekennzeichnet, dass** die Schnecke (3) an mindestens einer Seite eine Abflachung in axialer Richtung aufweist.

4. Vorrichtung gemäß Anspruch 1, **dadurch gekennzeichnet, dass** der Behälter (1) mindestens einen Kanal in seiner die Schnecke (3) umschließenden Wandung aufweist.

5. Vorrichtung gemäß Anspruch 1, **dadurch gekennzeichnet, dass** mindestens zwei Schnecken (3) von dem Behälter (1) umschlossen sind, wobei die Schnecken (3) ineinander kämmen.

6. Vorrichtung gemäß einem der Ansprüche 1 bis 5, **dadurch gekennzeichnet, dass** die mindestens eine Schnecke (3) Bereiche (23, 25, 27) unterschiedlicher Geometrie aufweist.

7. Vorrichtung gemäß einem der Ansprüche 1 bis 6, **dadurch gekennzeichnet, dass** die mindestens eine Schnecke (3) aus dem Behälter (1) entnehmbar ist.

8. Verfahren zum Mischen, Homogenisieren und/oder Herstellen von viskosen oder plastischen Medien (15) in einer Vorrichtung, umfassend einen Behälter (1) und mindestens eine Schnecke (3), die zumindest teilweise von dem Behälter (1) umschlossen ist, wobei das viskose oder plastische Medium (15) in dem Behälter (1) von der Schnecke (3) in Richtung des geschlossenen Bodens (19) des Behälters (1) gefördert wird, dort umgelenkt und entlang von Kanälen der Vorrichtung in Form einer Unterbrechung (17) wieder entgegen der Förderrichtung zurückströmt, wobei die Schnecke (3) mindestens einen Gang (11) umfasst, der die mindestens eine Unterbrechung (17) in axialer Richtung aufweist und das Zurückströmen des Mediums entgegen der Förderrichtung entlang der Unterbrechung (17) in der Schnecke (3) erfolgt.

9. Verfahren gemäß Anspruch 8, **dadurch gekennzeichnet, dass** zum Entleeren des Behälters (1) die Rotationsrichtung der mindestens einen Schnecke (3) umgekehrt wird.

10. Verfahren gemäß Anspruch 8, **dadurch gekennzeichnet, dass** die mindestens eine Schnecke (3) während der Rotation aus dem Behälter (1) entfernt wird, um so das Medium (15) im Behälter (1) zurückzuhalten.

11. Verwendung der Vorrichtung gemäß einem der Ansprüche 1 bis 7 zur Mischung von viskosen oder plastischen Medien in der Hochdurchsatzforschung.

## Claims

1. Device for mixing, homogenizing and/or producing viscous or plastic media (15), comprising a container (1) and at least one screw (3), which is at least partially enclosed by the container (1), **characterized in that** the at least one screw (3) is positioned in the container (1) such that the medium (15) contained in the container (1) is transported by a rotation of the at least one screw (3) with respect to the container (1) towards a closed bottom (19) of the container (1), is deflected there and flows back again counter to the transporting direction along channels of the device in the form of an interruption (17), the screw (3) comprising at least one flight (11), which has the at least one interruption (17) in the axial direction, and the flowing back of the medium counter to the transporting direction taking place along the interruption (17) in the screw (3).

2. Device according to Claim 1, **characterized in that** the screw (3) comprises at least one flight (11), which has at least one interruption (17) in the axial direction.

3. Device according to Claim 1, **characterized in that** the screw (3) has at least on one side a flattening in the axial direction.

4. Device according to Claim 1, **characterized in that** the container (1) has at least one channel in its wall enclosing the screw (3).

5. Device according to Claim 1, **characterized in that** at least two screws (3) are enclosed by the container (1), the screws (3) meshing in each other.

6. Device according to one of Claims 1 to 5, **characterized in that** the at least one screw (3) has regions (23, 25, 27) of differing geometry.

7. Device according to one of Claims 1 to 6, **characterized in that** the at least one screw (3) can be removed from the container (1).

8. Method for mixing, homogenizing and/or producing viscous or plastic media (15) in a device, comprising a container (1) and at least one screw (3), which is at least partially enclosed by the container (1), the viscous or plastic medium (15) in the container (1) being transported by the screw (3) in the direction of the closed bottom (19) of the container (1), deflected there and flowing back again counter to the transporting direction along channels of the device in the form of an interruption (17), the screw (3) comprising at least one flight (11), which has the at least one interruption (17) in the axial direction, and the flowing back of the medium counter to the transporting direction taking place along the interruption (17) in the screw (3).

9. Method according to Claim 8, **characterized in that** the direction of rotation of the at least one screw (3) is reversed for emptying the container (1).

10. Method according to Claim 8, **characterized in that** the at least one screw (3) is removed from the container (1) during the rotation in order in this way to retain the medium (15) in the container (1).

11. Use of the device according to one of Claims 1 to 7 for mixing viscous or plastic media in high throughput research.

## Revendications

1. Dispositif pour mélanger, homogénéiser et/ou préparer des milieux visqueux ou plastiques (15), comprenant un récipient (1) et au moins une vis sans fin (3), qui est entourée au moins en partie par le récipient (1), **caractérisée en ce que** l'au moins une vis sans fin (3) est positionnée dans le récipient (1) de telle sorte que par une rotation de l'au moins une vis sans fin (3) par rapport au récipient (1), le milieu (15) contenu dans le récipient (1) soit transporté vers un fond fermé (19) du récipient (1), y soit dévié et soit à nouveau reflué le long de canaux du dispositif sous la forme d'une interruption (17) à l'encontre du sens de transport, la vis sans fin (3) comprenant au moins un pas (11) qui présente au moins une interruption (17) dans la direction axiale et le reflux du milieu s'effectuant à l'encontre de la direction de transport le long de l'interruption (17) dans la vis sans fin (3).

2. Dispositif selon la revendication 1, **caractérisé en ce que** la vis sans fin (3) comprend au moins un pas (11) qui présente au moins une interruption (17) dans la direction axiale.

3. Dispositif selon la revendication 1, **caractérisé en ce que** la vis sans fin (3) présente un aplatissement dans la direction axiale au niveau d'au moins un côté.

4. Dispositif selon la revendication 1, **caractérisé en ce que** le récipient (1) présente au moins un canal dans sa paroi entourant la vis sans fin (3).

5. Dispositif selon la revendication 1, **caractérisé en ce qu'**au moins deux vis sans fin (3) sont entourées par le récipient (1), les vis sans fin (3) s'engrenant l'une dans l'autre.

6. Dispositif selon l'une quelconque des revendications 1 à 5, **caractérisé en ce que** l'au moins une vis sans fin (3) présente des régions (23, 25, 27) de différentes géométries.

7. Dispositif selon l'une quelconque des revendications 1 à 6, **caractérisé en ce que** l'au moins une vis sans fin (3) peut être retirée du récipient (1).

8. Procédé pour mélanger, homogénéiser et/ou préparer des milieux visqueux ou plastiques (15) dans un dispositif, comprenant un récipient (1) et au moins une vis sans fin (3), qui est entourée au moins en partie par le récipient (1), le milieu visqueux ou plastique (15) dans le récipient (1) étant transporté par la vis sans fin (3) dans la direction du fond fermé (19) du récipient (1), y étant dévié et étant à nouveau reflué le long de canaux du dispositif sous forme d'une interruption (17) à l'encontre de la direction de transport, la vis sans fin (3) comprenant au moins un pas (11) qui présente l'au moins une interruption (17) dans la direction axiale, et le reflux du milieu s'effectuant à l'encontre de la direction de transport le long de l'interruption (17) dans la vis sans fin (3).

9. Procédé selon la revendication 8, **caractérisé en ce que** pour vider le récipient (1), le sens de rotation de l'au moins une vis sans fin (3) est inversé.

10. Procédé selon la revendication 8, **caractérisé en ce que** l'au moins une vis sans fin (3) est enlevée du récipient (1) au cours de la rotation, afin de retenir ainsi le milieu (15) dans le récipient (1) .

11. Utilisation du dispositif selon l'une quelconque des revendications 1 à 7 pour mélanger des milieux visqueux ou plastiques dans le domaine de la recherche sur les hauts débits.
